# EUROPEAN PATENT APPLICATION

(11) **EP 4 439 757 A1**
(43) Date of publication of application: **02.10.2024**
(21) Application number: 22895730.4
(22) Date of filing: 21.11.2022
(51) Int. Cl.: H01M 10/052, H01M 4/13, H01M 10/0565, H01M 10/058, H01M 50/414, H01M 50/434, H01M 50/44, H01M 50/443, H01M 50/446, H01M 50/489

(54) **FLEXIBLE ALL-SOLID-STATE BATTERY AND METHOD FOR MANUFACTURING SAME**

(30) Priority: 22.11.2021 JP 2021189674
(71) Applicant: National Institute of Advanced Industrial Science and Technology, Chiyoda-ku Tokyo 100-8921 (JP)
(72) Inventor: SUZUKI, Muneyasu, Tsukuba-shi, Ibaraki 305-8560 (JP); USHIJIMA, Hirobumi, Tsukuba-shi, Ibaraki 305-8560 (JP)
(74) Representative: dompatent von Kreisler Selting Werner - Partnerschaft von Patent- und Rechtsanwälten mbB
(86) International application number: PCT/JP2022/043065
(87) International publication number: WO 2023/090449

(57) **Abstract**

An embodiment of the present invention provides a flexible all-solid-state battery including a weight energy density comparable to that of a conventional lithium-ion battery using an electrolytic solution and having a high level of safety that does not short-circuit even when bent under an excessive bending load. According to an embodiment of the present invention, a flexible all-solid-state battery including a layer of a solid-state polymer electrolyte arranged between a layer of a separator supporting the solid-state polymer electrolyte and a layer including a negative electrode active material is provided. In the flexible all-solid-state battery, the separator may include a woven fabric, a knit, or a non-woven cloth of an inorganic fiber or a polymeric fiber of 1 g/m² to 70 g/m² with a thickness in a range from 1 µm to 100 µm, an oxide ceramic particle layer including oxide ceramic particles with a particle size from 1 µm to 20 µm at a filling rate in a range from 5% to 60%, or a complex of the woven fabric, the knit, or the non-woven cloth and the oxide ceramic particles.

## Description

### TECHNICAL FIELD

The present invention relates to a new structure of an all-solid-state battery having flexibility, and a technology for manufacturing the battery.

### BACKGROUND ART

Wearable devices have been popularized as computers to be worn on the body since the early 2000s, and eyeglass devices and IoT (Internet of Things) that are linked with smart phones have attracted attention at present. Recently, technology development of a sensor suit of an inertia type motion capture system that estimates a posture of a person by attaching a sensor including magnetism, acceleration, and gyro to the body has been carried out. In addition, the technology development of an organic device that is compatible with humans and does not feel like anything being worn by using an organic material having high biocompatibility that can be utilized in the healthcare field has been carried out. In this way, the use of wearable devices is expanding on a daily basis.

With regards to batteries that supply electric power to these wearable devices, lithium ion batteries having high energy density, small size, and light weight are used. However, in a device that requires a storage capacity of several hundred mAh or more, there is a problem that the user feels inconvenient due to body attachment of a lithium ion battery that is hard and cannot be bent.

Therefore, in a conventional lithium ion battery using an electrolytic solution, a battery of Non Patent Literature 1 formed into a cable shape has been considered. In addition, a battery of Non Patent Literature 2 in which a very small lithium ion battery is joined by a flexible electric wiring has been considered. In addition, a battery of Non Patent Literature 3 in which an internal battery is sealed with an elastomer such as silicone rubber and connected by a spring-shaped wiring has been considered. In addition, a battery of Non Patent Literature 4 having a structure such as Kirigami has been considered. In addition, a battery of Non Patent Literature 5 in which a lithium ion battery is formed into a fiber shape has been considered. However, in these batteries, there is a problem in that the volume ratio occupied by wiring supports and exterior bodies connecting internal batteries is high, and energy density expected for the entire battery is remarkably lowered.

In addition, a method of providing flexibility by making the lithium ion battery itself thin has also been adopted. However, since the battery has an electrolytic solution that causes ignition, there is a serious problem in terms of safety as a wearable battery. Although a thin lithium polymer battery of Patent Literature 1 using a polymer electrolyte can be provided with flexibility, it is easily short-circuited when bent under an excessive load, and thus there is a problem in safety.

All-solid-state batteries using flame retardant and non-flammable materials have high levels of safety. However, a sulfide-based all-solid-state battery as in Patent Literature 2 manufactured by press-molding a powdery battery material needs to be tightened with a strong force so as not to peel off the solid electrolyte due to expansion and contraction of the active material caused by charging and discharging, and cannot be bent because it is provided with a strong and hard exterior body or a support so as not to lose the force. The oxide-based all-solid-state battery produced by a sintering method is likewise hard and cannot be bent. In a thin film all-solid-state battery manufactured by a thin film process such as a sputtering method, it is difficult to manufacture the battery as a battery having a storage capacity exceeding several mAh because an active material layer having a sufficiently large thickness cannot be provided.

An all-solid-state lithium polymer battery in which an active material and a separator are bonded with a solid-state polymer electrolyte has flexibility without requiring a strong exterior body, and a structure of Patent Literature 3 and a method for manufacturing the battery are preferable. However, in practice, when larger than a few mAh (the area is 4 cm²), the battery-reaction between lithium ions and an active material is inhibited due to a phenomenon peculiar to the solid-state polymer in which the active material and the separator easily come into close contact with each other, and as a consequence, there is a problem that lithium dendrites are generated during charging and short-circuits are easily caused.

### CITATION LIST

### PATENT LITERATURE

Patent Literature 1: Japanese Laid-Open Patent Publication No. 2002-63938
Patent Literature 2: Japanese Laid-Open Patent Publication No. 2008-103289
Patent Literature 3: Japanese Laid-Open Patent Publication No. H9-231999

### NON PATENT LITERATURE

Non Patent Literature 1: Sang-Young Lee et al., Energy Environ. Sci. 6, 2414 (2013).
Non Patent Literature 2: Joo-Seong Kim et al., J. Mater. Chem. A 2, 10862 (2014).
Non Patent Literature 3: Sheng Xu et al., Nature communications 4, 1543 (2013).
Non Patent Literature 4: Zeming Song et al., Scientific reports 5, 10988 (2015).
Non Patent Literature 5: Lijun Lu et al., Materials Today Chemistry 5, 24 (2017).
Non Patent Literature 6: David G. Mackanic et al., Nature communications 10, 5384 (2019).

### SUMMARY OF INVENTION

### TECHNICAL PROBLEM

One of the objects of an embodiment of the present invention is to provide a flexible all-solid-state battery having a weight energy density comparable to that of a conventional lithium-ion battery using an electrolytic solution, and having a high level of safety that does not cause a short-circuit even if bent under an excessive bending load.

### SOLUTION TO PROBLEM

According to an embodiment of the present invention, there is provided a flexible all-solid-state battery including a layer of a solid-state polymer electrolyte arranged between a layer of a separator supporting the solid-state polymer electrolyte and a layer including a negative electrode active material.

In the flexible all-solid-state battery, the separator may include a woven fabric, a knit, or a non-woven cloth of an inorganic fiber or a polymeric fiber of 1 g/m² to 70 g/m² with a thickness in a range of 1 µm to 100 µm, or an oxide ceramic particle layer including oxide ceramic particles with a particle size from 1 µm to 20 µm at a filling rate in a range from 5% to 60%, or a complex of the woven fabric, the knit, or the non-woven cloth and the oxide ceramic particles.

In the flexible all-solid-state battery, a thickness of the layer of the solid-state polymer electrolyte may be in range from 500 nm to 60 µm.

In the flexible all-solid-state battery, a negative electrode sheet composed of a layer including the negative electrode active material and a negative electrode current collector contacting the negative electrode active material may be included, and the negative electrode sheet may have a capacitance from 0.1 mAh/cm² to 7 mAh/cm².

In the flexible all-solid-state battery, a positive electrode sheet having a capacitance from 0.1 mAh/cm² to 7 mAh/cm² may further be included.

In the flexible all-solid-state battery, a thickness of a layer of the solid-state polymer electrolyte arranged between the layer of the separator supporting the solid-state polymer electrolyte and a layer including a positive electrode active material may be in a range from 500 nm to 60 µm.

The flexible all-solid-state battery may have an electrode area larger than 1.77 cm².

The flexible all-solid-state battery may have a bent shape.

Further, according to an embodiment of the present invention, a method for manufacturing a flexible all-solid-state battery including applying a polymer solution mixed with a polymer electrolyte and an initiator on a composite material layer including an active material supporting a solid-state polymer electrolyte, laminating a flat board or a film, and forming a cross-link while applying a load in a range of 1 kPa to 500 kPa, applying the polymer solution on a positive electrode sheet or a negative electrode sheet, placing a separator on the applied polymer solution to impregnate with the polymer solution, sandwiching between flat plates or films after pasting with the negative electrode sheet or the positive electrode sheet, and forming a cross-link while applying a load in a range of 1 kPa to 500 kPa, and manufacturing an all-solid-state battery including a layer of the solid-state polymer electrolyte on both surfaces of the separator supporting the solid-state polymer electrolyte is provided.

In the method for manufacturing the flexible all-solid-state battery, the all-solid-state battery including the layer of the solid-state polymer electrolyte may be sandwiched between flat plates or films, and an initial charging may be performed while applying a load of 1 kPa to 1 MPa.

### ADVANTAGEOUS EFFECTS OF INVENTION

According to the present invention, it is possible to provide a flexible all-solid-state battery having a weight energy density comparable to that of a conventional lithium-ion battery using an electrolytic solution and having a high level of safety that does not cause a short-circuit even if bent under an excessive bending load.

### BRIEF DESCRIPTION OF DRAWINGS

FIG. 1 is a cross-sectional end view of an internal battery of a flexible all-solid-state battery 1 according to an embodiment of the present invention.
FIG. 2 is an exploded perspective view of a flexible all-solid-state battery 18 according to an embodiment of the present invention.
FIG. 3 is a cross-sectional end view of an internal battery 1a of a flexible all-solid-state battery according to an embodiment of the present invention.
FIG. 4 is an exploded perspective view of an electric unit 21 in which the internal batteries are laminated and sealed with the outer body.
FIG. 5 is a schematic diagram of a method for manufacturing an internal battery 1a of a flexible all-solid-state battery according to an embodiment of the present invention.
FIG. 6 is a schematic diagram of a method for manufacturing an internal battery 1a of a flexible all-solid-state battery according to an embodiment of the present invention.
FIG. 7 is a schematic diagram of a method for manufacturing an internal battery 1a of a flexible all-solid-state battery according to an embodiment of the present invention.
FIG. 8 is a photograph of a glass cloth used in an example of the present invention.
FIG. 9 is a diagram showing charge/discharge characteristics of a flexible all-solid-state battery according to an example of the present invention.
FIG. 10 is a cross-sectional SEM image of a flexible all-solid-state battery according to an example of the present invention.
FIG. 11 is a cross-sectional SEM image of a flexible all-solid-state battery according to an example of the present invention.
FIG.12 is a photograph showing a state in which a propeller is rotated by a flexible all-solid-state battery according to an example of the present invention.
FIG.13 is a photograph of aramid cloth used in an example of the present invention.
FIG.14 is a typical cross-sectional SEM image of a comparative example 1.
FIG.15 is a diagram showing charge/discharge characteristics of an electric unit in which internal batteries according to an example of the present invention are laminated and sealed with an exterior body.

### DESCRIPTION OF EMBODIMENTS

Hereinafter, a flexible all-solid-state battery and a method for manufacturing the flexible all-solid-state battery according to the present invention will be described with reference to the drawings. It should be noted that the flexible all-solid-state battery and the method for manufacturing the flexible all-solid-state battery according to the present invention are not to be construed as being limited to the descriptions of embodiments and examples described below. In the drawings referred to in the present embodiment and the examples to be described later, the same parts or parts having similar functions are denoted by the same reference signs, and repeated description thereof will be omitted.

The present inventors have intensively studied a new structure of a lithium-ion battery that can solve the problems of the prior art described above, and a method for manufacturing the structure, and as a result, have found that by including layers of a solid-state polymer electrolyte on both surfaces of a layer of a separator supporting the solid-state polymer electrolyte, an all-solid-state battery having flexibility capable of charging and discharging and larger than 1 cm² that does not short-circuit even if bent can be constructed.

### [First Embodiment]

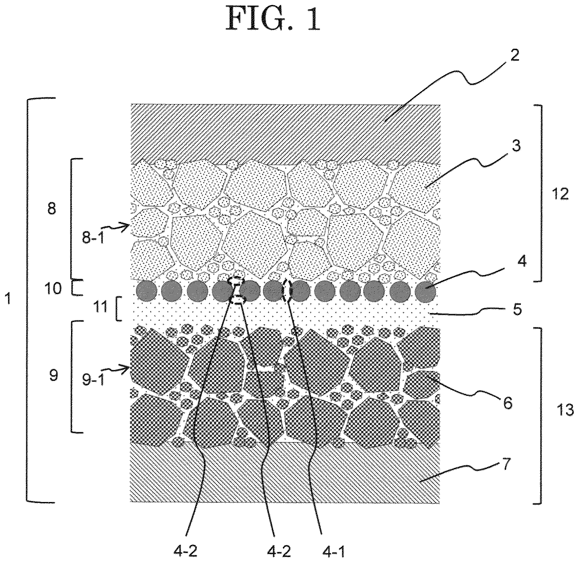

FIG. 1 is a cross-sectional end view of an internal battery 1 of a flexible all-solid-state battery according to an embodiment of the present invention. The internal battery 1 includes a layer 10 of a separator supporting a solid-state polymer electrolyte and a layer 9 including a negative electrode active material. Further, the internal battery 1 includes a layer 11 of the solid-state polymer electrolyte arranged between the layer 10 of the separator supporting the solid-state polymer electrolyte and the layer 9 including the negative electrode active material. The internal battery 1 further includes a layer 8 including a positive electrode active material on a surface of the layer 10 of the separator supporting the solid-state polymer electrolyte opposite to a surface on which the layer 9 including the negative electrode active material is arranged.

### [Layer of Separator Supporting Solid-state Polymer Electrolyte]

In an embodiment, the layer 10 of the separator supporting the solid-state polymer electrolyte includes a solid-state polymer electrolyte and a separator 4. The separator 4 is made of a material that does not react with lithium ions and can be arranged as a sheet-like structure. The separator 4 has a hole 4-1 that penetrates through the sheet-like structure in which a solid polymer electrolyte can be arranged. In other words, the separator 4 has openings 4-2 on both surfaces of the sheet-like structure, and has the hole 4-1 in which at least two openings 4-2 arranged corresponding to the sheet-like structure are connected. In the present embodiment, one selected from the group consisting of glass fibers, woven fabrics of aramid fibers, and alumina particles can be used as the separator 4, but the present invention is not limited thereto.

The hole arranged in the separator 4 has openings of a size such that the solid-state polymer electrolyte does not escape from the hole 4-1 when the polymer solution of the polymer forms a cross-link to become the solid-state polymer electrolyte. Specifically, the separator 4 is a woven fabric, a knit, or a non-woven cloth of an inorganic fiber or a polymeric fiber having a thickness of about 1 µm to 100 µm, which is composed of fibers having a thickness of 40 µm or less per single piece. Alternatively, the separator 4 is a woven fabric, a knit, or a non-woven cloth of an inorganic fiber or a polymeric fiber having openings of about 1 µm to 2 mm. Alternatively, the separator 4 is a woven fabric, a knit, or a non-woven cloth of an inorganic fiber or a polymeric fiber of about 1 g/m² to 70 g/m². Alternatively, the separator 4 is an oxide ceramic particle layer in which oxide ceramic particles having a particle diameter of 1 µm to 20 µm are arranged at a filling rate of about 10% to 60%. Alternatively, the separator 4 is a complex of these woven fabric, knit, or non-woven cloth and oxide ceramic particles. In addition, although the oxide ceramic particle layer formed by arranging oxide ceramic particles is shown as an example of the separator 4 in FIG. 1, the present invention is not limited thereto. Examples of the inorganic fiber may include fibers of alumina, silica, and a compound containing the same. Examples of the polymeric fiber may include fibers of nylon, aramid, vinylon, vinylidene, polyvinyl chloride, polyester, acrylic, polyethylene, polypropylene, polyurethane, polyclar, polylactic acid, polytetrafluoroethylene (PTFE), and polyvinylidene fluoride. Examples of the oxide ceramic particles may include particles of alumina, silica, titania, magnesia, zirconia, zinc oxide, and compounds containing the same.

A material in which a product of ionic conductivity and a transport number is superior to 5.0×10⁻⁶ S/cm at room temperature (25°C) is preferable as the solid-polymer electrolyte, a material in which ionic conductivity is superior to 2.0×10⁻⁵ S/cm at room temperature (25°C) and superior to 1.0×10⁻⁴ S/cm at 60°C is preferable. For example, the ion conductive polymer containing lithium ions described in Non Patent Literature 6 can be used. More specifically, mixtures of a polymer having a polypropylene glycol)-pol(ethylene glycol)-poly(propylene glycol)(PPG-PEG-PPG) skeleton and 2-ureido-4-pyrimidone with a quadruple bond motif introduced into the skeleton and lithium ions can be suitably used as the solid-state polymer electrolyte.

In addition, in an embodiment, although an initiator used in forming the solid-state polymer electrolyte by a polymerization reaction includes an initiator such as azobisisobutyronitrile disclosed in Prior Literature 3, the initiator is not limited thereto.

The solid-state polymer electrolyte is preferably arranged in the hole 4-1 of the separator 4 and continuously arranged in the hole 4-1 so as to connect the openings 4-2 arranged on both sides of the separator 4.

### [Layer including Negative Electrode Active Material]

The layer 9 including the negative electrode active material includes a negative electrode composite layer 9-1 and the solid-state polymer electrolyte described above. The negative electrode composite layer 9-1 is a layer in which a negative electrode active material 6 is formed in a sheet shape. Although the negative electrode active material 6 is preferably, for example, graphite or lithium titanate, the negative electrode active material 6 is not limited thereto. In addition to the negative electrode active material 6, the negative electrode composite layer 9-1 may further include a binder such as polyvinylidene fluoride (PVdF) or polytetrafluoroethylene (PTFE), or a conductive auxiliary agent such as carbon nanotubes (for example, VGCF (registered trademark)).

In addition, a negative electrode current collector 7 can be arranged on a surface of the negative electrode composite layer 9-1 facing a surface on which the layer of the solid-state polymer electrolyte 11 is arranged, thereby forming a negative electrode sheet 13. In other words, the negative electrode sheet 13 has a structure in which the layer 9 including the negative electrode active material is arranged on the negative electrode current collector 7. Therefore, the negative electrode sheet 13 includes a negative electrode current collector 7, a negative electrode composite layer 9-1, and a solid-state polymer electrolyte arranged inside the negative electrode composite layer 9-1.

In an embodiment, although copper foil is exemplified as the negative electrode current collector 7, foil having electrical conductivity with flexibility that does not corrode by reacting with a solid-state polymer electrolyte such as gold foil or platinum foil can be used. A thickness of the negative electrode current collector 7 only needs to be appropriately flexible, and is, for example, in a range of 500 nm to 100 µm, in a range of 5 µm to 30µm, and preferably has a thickness of 12 µm.

The capacity of the negative electrode sheet 13 may be larger than the capacity of a positive electrode sheet 12, and is, for example, in a range of 0.1 mAh/cm² to 7 mAh/cm², and preferably has a capacity of about 1.6 mAh/cm².

### [Layer of Solid-state Polymer Electrolyte]

The layer 11 of the solid-state polymer electrolyte is a layer arranged between the layer 10 of the separator supporting the solid-state polymer electrolyte and the layer 9 including the negative electrode active material, and is a layer including the solid-state polymer electrolyte described above.

A thickness of the layer 11 of the solid-polymer electrolyte may be any thickness as long as the separator 4 and the negative electrode active material 6 constituting the negative electrode composite layer 9-1 are not in close contact with each other, and specifically, the thickness is preferably in a range from 500 nm to 60 µm, or from 2 µm to 30 µm. In addition, the layer 11 of the solid-state polymer electrolyte may include an inorganic solid-state electrolyte having a lower reduction potential than a negative electrode active material such as a garnet-type solid electrolyte.

### [Layer including Positive Electrode Active Material]

The layer 8 including the positive electrode active material includes a positive electrode composite layer 8-1 and the solid-state polymer electrolyte described above. The positive electrode composite layer 8-1 is a layer in which a positive electrode active material 3 is formed in a sheet shape. Although the positive electrode active material 3 is preferably a material selected from, for example, lithium cobaltate, lithium manganate, lithium nickelate, lithium nickel manganese cobalt oxide, and lithium iron phosphate, the material is not limited thereto. In addition to the positive electrode active material 3, the positive electrode composite layer 8-1 may further include a binder such as polyvinylidene fluoride (PVdF) or polytetrafluoroethylene (PTFE), or a conductive auxiliary agent such as carbon nanotubes (for example, VGCF (registered trademark)).

In addition, a positive electrode current collector 2 can be arranged on a surface of the positive electrode composite layer 8-1 facing the surface on which the layer 10 of the separator supporting the solid-state polymer electrolyte is arranged, thereby forming the positive electrode sheet 12. In other words, the positive electrode sheet 12 has a structure in which the layer 8 including the positive electrode active material is arranged on the positive electrode current collector 2. Accordingly, the positive electrode sheet 12 includes the positive electrode current collector 2, the positive electrode composite layer 8-1, and a solid-state polymer electrolyte arranged inside the positive electrode composite layer 8-1.

In an embodiment, although aluminum foil is exemplified as the positive electrode current collector 2, it is possible to use foil having electrical conductivity with flexibility that does not corrode by reacting with a solid-state polymer electrolyte selected from stainless steel foil, titanium foil, gold foil and platinum foil or the like. A thickness of the positive electrode current collector 2 may provide an appropriate flexibility, and is, for example, in a range of 500 nm to 100 µm, in a range of 5 µm to 30µm, and preferably has a thickness of 12 µm.

The capacity of the positive electrode sheet 12 may be smaller than the capacity of the negative electrode sheet 13, and is, for example, in a range of 0.1 mAh/cm² to 7 mAh/cm², and preferably has a capacity of about 1.5 mAh/cm².

In the present embodiment, the layer 10 of the separator supporting the solid-state polymer electrolyte and the layer 8 including the positive electrode active material are arranged in close contact with each other. In the internal battery 1 according to the present embodiment, the solid-state polymer electrolyte included in the layer 9 including the negative electrode active material, the solid-state polymer electrolyte included in the layer 10 of the separator supporting the solid-state polymer electrolyte, and the solid-state polymer electrolyte included in the layer 8 including the positive electrode active material are arranged continuously, and lithium ion conductivity from the positive electrode active material 3 to the negative electrode active material 6 can be imparted via the separator 4.

### [All-Solid-State Battery]

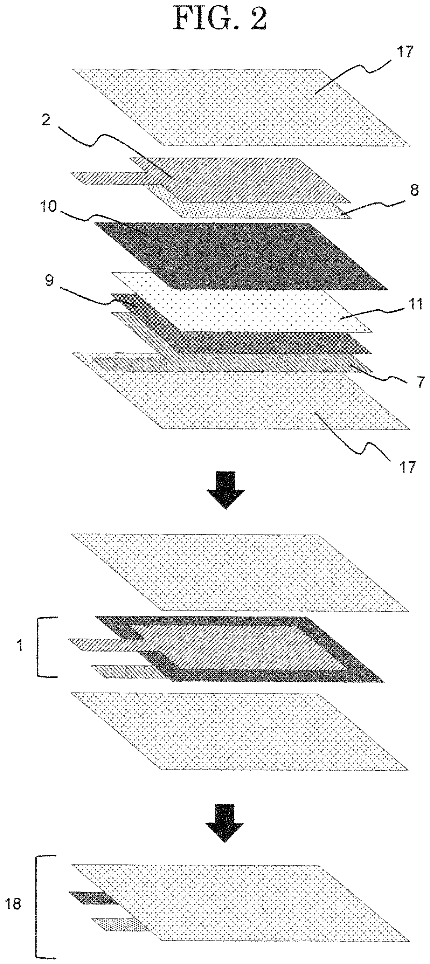

FIG. 2 is a schematic diagram of a flexible all-solid-state battery 18 according to an embodiment of the present invention. The internal battery 1 in which the positive electrode current collector 2, the layer 8 including the positive electrode active material, the layer 10 of the separator supporting the solid-state polymer electrolyte, the layer 11 of the solid-state polymer electrolyte, the layer 9 including the negative electrode active material, and the negative electrode current collector 7 are sequentially laminated is covered with an exterior body 17, whereby the flexible all-solid battery 18 according to the present embodiment can be constructed. The exterior body 17 can be formed, for example, by vacuum-packing the internal battery 1 with a laminate film, or wrapping with glass fibers or aramid fibers, and then impregnating with a resin such as an epoxy resin.

The flexible all-solid-state battery 18 according to the present embodiment suppresses adhesion between the separator 4 and the negative electrode active material 6, and prevents formation of lithium dendrite in a low potential area in a battery reaction between graphite and lithium ions, so that it is possible to realize an all-solid-state battery having flexibility capable of performing normal charging and discharging, and being larger than 1 cm² that does not short-circuit even if the battery is bent.

### [Second Embodiment]

In the first embodiment, the flexible all-solid-state battery 18 having the internal battery 1 including the layer 11 of the solid-state polymer electrolyte arranged between the layer 10 of the separator supporting the solid-state polymer electrolyte and the layer 9 including the negative electrode active material has been described. In the present embodiment, the internal battery 1a including the layer 11 of the solid-state polymer electrolyte is arranged between the layer 10 of the separator supporting the solid-state polymer electrolyte and the layer 9 including the negative electrode active material, and between the layer 10 of the separator supporting the solid-state polymer electrolyte and the layer 8 including the positive electrode active material.

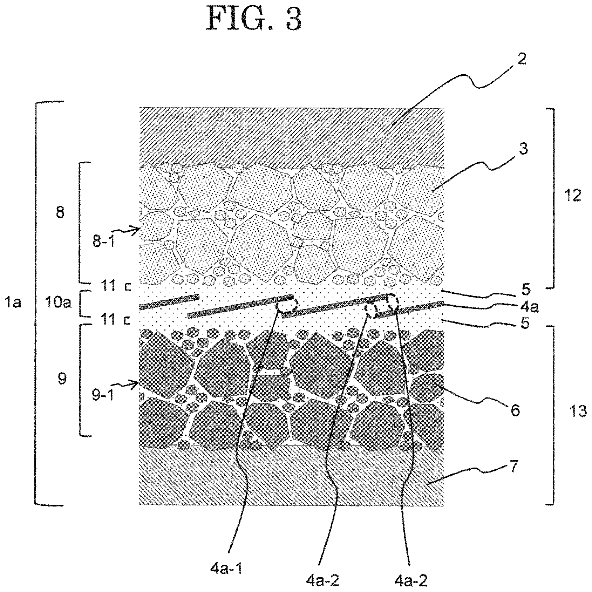

FIG. 3 is a cross-sectional end view of the internal battery 1a of a flexible all-solid-state battery according to an embodiment of the present invention. In FIG. 3, although an example in which a separator 4a made of a woven fabric, a knit, or a non-woven cloth of an inorganic fiber or a polymeric fiber is used is shown, the separator 4 made of an oxide-ceramic particulate layer may be used in the internal battery 1a. The separator 4a has a hole 4a-1 that penetrates a sheet-like structure and allows a solid-polymer electrolyte to be arranged therein. In other words, the separator 4a has openings 4a-2 on both sides of the sheet-like structure, and has the hole 4a-1 in which at least two openings 4a-2 arranged corresponding to the sheet-like structure are connected.

In the internal battery 1a, layers 11 of the solid-state polymer electrolyte are respectively arranged on both surfaces of the layer 10a of a separator supporting the solid-state polymer electrolyte. In one layer 11 of the solid-state polymer electrolyte, the layer 9 including the negative electrode active material is arranged opposite to the separator 4, and in the other layer 11 of the solid-state polymer electrolyte, the layer 8 including the positive electrode active material is arranged. The negative electrode current collector 7 is arranged on the surface of the layer 9 including the negative electrode active material facing the separator 4. The positive electrode current collector 2 is arranged on the surface of the layer 8 including the positive electrode active material facing the separator 4.

In addition, the positive electrode current collector 2, the negative electrode current collector 7, the layer 8 including the positive electrode active material, the layer 9 including the negative electrode active material, and the layer 11 of the solid-state polymer electrolyte may have the same configuration as that described in the first embodiment, and a detailed description thereof will be omitted.

By using an internal battery 1a instead of the internal battery 1, the flexible all-solid-state battery 18 can be configured. The exterior body 17 covering the internal battery 1a may have the same configuration as that described in the first embodiment, and detailed explanation thereof will be omitted.

The flexible all-solid-state battery 18 according to the present embodiment suppresses adhesion between the separator 4a and the negative electrode active material 6, and adhesion between the separator 4a and the positive electrode active material 3, and prevents formation of lithium dendrite in a low-potential area in a battery reaction between graphite and lithium ions. Therefore, it is possible to realize an all-solid-state battery having flexibility capable of performing normal charging and discharging, and being larger than 1 cm² that does not short-circuit even if the battery is bent.

### [Third Embodiment]

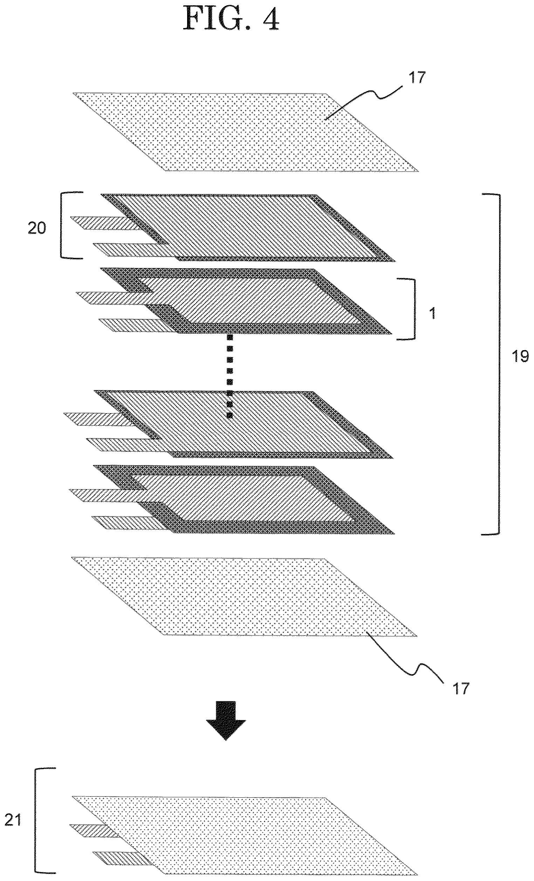

As a third embodiment, an electric unit 21 in which a plurality of the internal batteries 1 of the first embodiment or a plurality of the internal batteries 1a of the second embodiment are laminated will be described. FIG. 4 is an exploded perspective view of the electric unit 21 according to the present embodiment. The electric unit 21 includes an internal battery laminate 19 in which the internal battery 1 and an internal battery 20 in which an arrangement of upper and lower portions of the internal battery 1, that is, the positive electrode sheet 12 and the negative electrode sheet 13 are reversely configured with respect to the layer 10 of the separator supporting the solid-state polymer electrolyte are stacked. The internal battery 20 may have the same configuration as the internal battery 1 except that the arrangement of the positive electrode sheet 12 and the negative electrode sheet 13 is reversed, and detailed description thereof will be omitted. In the internal battery laminate 19, the positive electrode current collector 2 of the internal battery 1 and the positive electrode current collector 2 of the internal battery 20 adjacent to each other are laminated so that the negative electrode current collector 7 of the internal battery 20 and the negative electrode current collector 7 of the internal battery 1 are adjacent to each other.

The exterior body 17 covers the internal battery laminate 19, thereby forming the electric unit 21. In addition, the exterior body 17 may have the same configuration as that described in the first embodiment, and detailed description thereof will be omitted.

In the electric unit 21, the internal battery 1a can be used instead of the internal battery 1. The internal battery 20 is an internal battery in which the arrangement of the positive electrode sheet 12 and the negative electrode sheet 13 according to the internal battery 1a is reversed with respect to the layer 10 of the separator supporting the solid-polymer electrolyte.

The electric unit 21 according to the present embodiment suppresses the adhesion between the separator 4 and the negative electrode active material 6, and prevents the formation of lithium dendrite in the low-potential area in the battery reaction between the graphite and the lithium ions. Therefore, it is possible to realize an electric unit having flexibility capable of performing normal charging and discharging, and being larger than 1 cm² that does not short-circuit even if the battery is bent.

### [Method for Manufacturing Internal Battery]

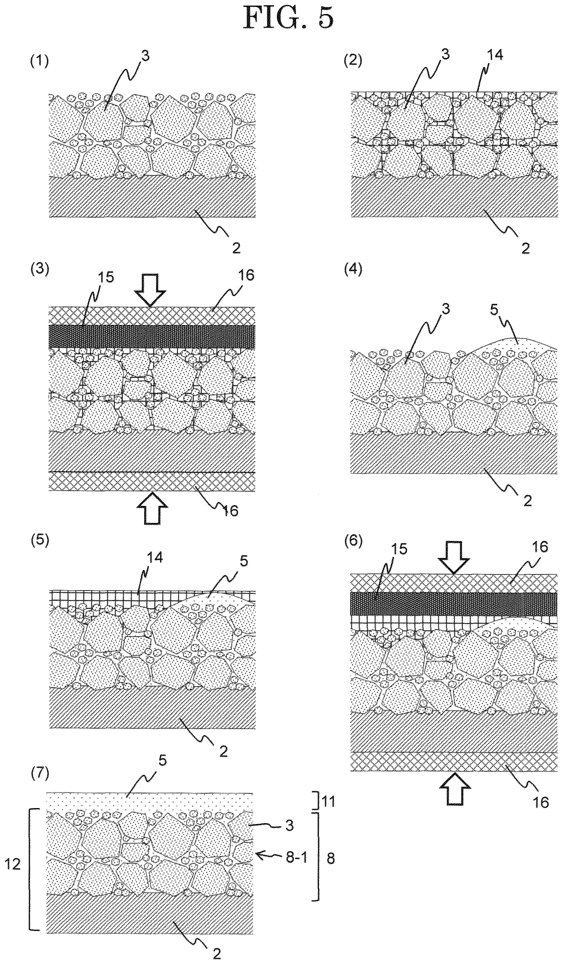

The internal battery 1a described in the second embodiment will be exemplified to describe a method for manufacturing an internal battery. FIG. 5 to FIG. 7 are schematic diagrams of methods for manufacturing the internal battery 1a according to an embodiment of the present invention. The positive electrode composite layer 8-1 (FIG. 5(1)) including the positive electrode active material 3 on the positive electrode current collector 2 is impregnated with a polymer solution 14 (FIG. 5(2)). The positive electrode composite layer 8-1 impregnated with the polymer solution 14 and the positive electrode current collector 2 are sandwiched between two plates 16 of glass or metal, and form a cross-link of the polymer contained in the polymer solution 14 by heat or light while applying a load (FIG. 5(3)), thereby producing the positive electrode sheet 12 (FIG. 5(4)). Subsequently, the polymer solution is further applied to the positive electrode sheet 12 (FIG. 5(5)), and these are likewise sandwiched between the plates 16 and form a cross-link while applying a load (FIG. 5(6)). Thus, the layer 11 of the solid-state polymer electrolyte can be laminated on the positive electrode sheet 12 (FIG. 5(7)). When forming the cross-link of the polymer while applying the load, a polymer film 15 may be provided between the plate 16 and the polymer solution 14. Although the polymer film 15 is preferably a PET film, a polyethylene film, or the like, the polymer film 15 is not limited thereto.

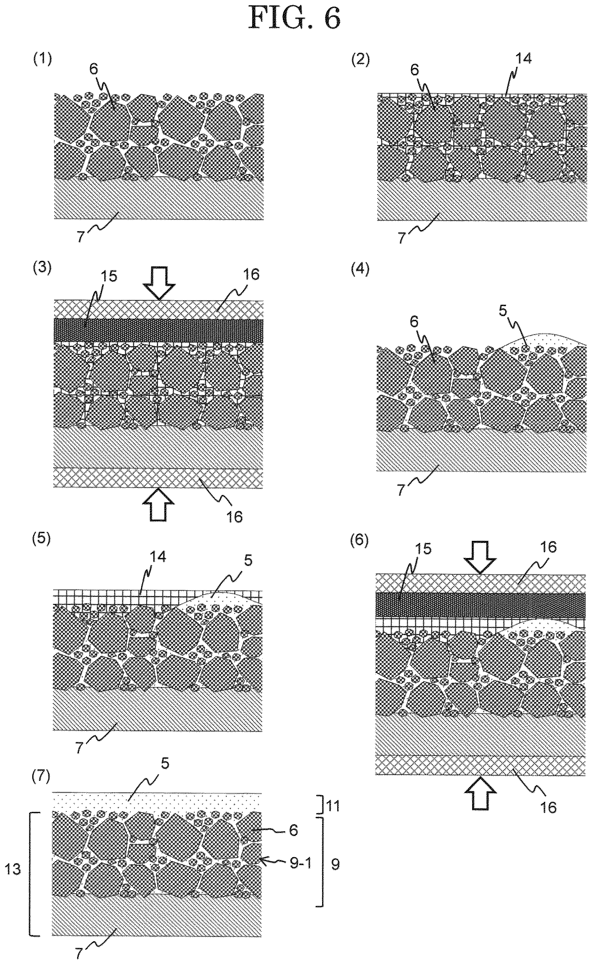

The negative electrode composite layer 9-1 (FIG. 6(1)) including the negative electrode active material 6 on the negative electrode current collector 7 is impregnated with the polymer solution 14 (FIG. 6(2)). The negative electrode composite layer 9-1 impregnated with the polymer solution 14 and the negative electrode current collector 7 are sandwiched between two plates 16 of glass or metal, and the polymer contained in the polymer solution 14 forms a cross-link by heat or light while applying a load (FIG. 6(3)), thereby producing the negative electrode sheet 13 (FIG. 6(4)). Subsequently, the polymer solution 14 is further applied to the negative electrode sheet 13 (FIG. 6 (5)), by being sandwiched by the plates 16 in the same manner (FIG. 6 (6)), and forming a cross-link while applying a load, the layer 11 of the solid-state polymer electrolyte can be laminated on the negative electrode sheet 13 (FIG. 6 (7)). When forming the cross-link while applying the load, the polymer film 15 may be provided between the plate 16 and the polymer solution 14. Although the polymer film 15 is preferably a PET film, a polyethylene film, or the like, the polymer film 15 is not limited thereto.

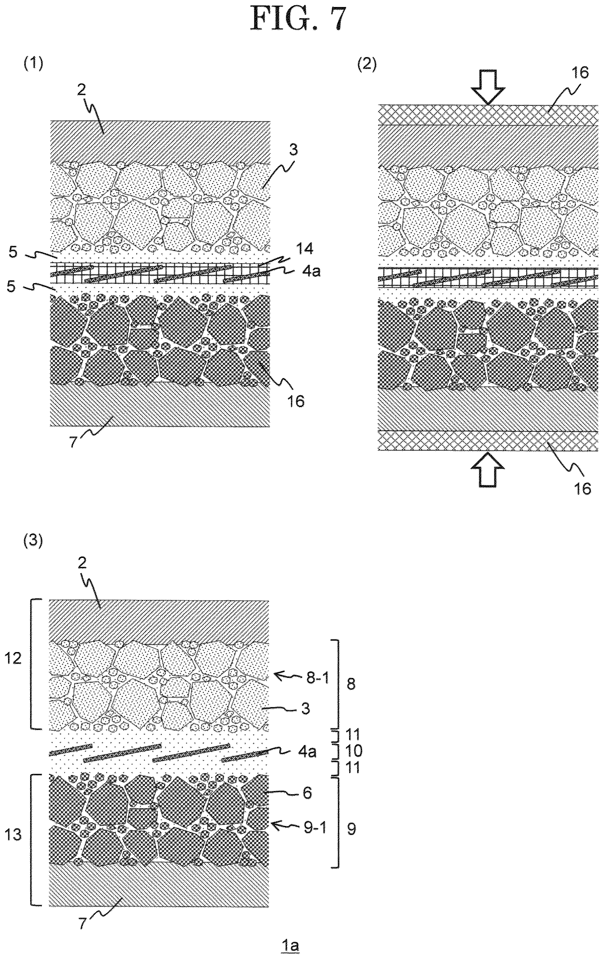

Next, after the positive electrode sheet 12 and the negative electrode sheet 13 in which the layers 11 of the solid-state polymer electrolyte are laminated are laminated via the separator 4 impregnated with the polymer solution 14 (FIG. 7(1)), these are sandwiched between two plates and from a cross-link by heat while applying a load to produce a structure of a battery (FIG. 7(2)). Thereafter, the internal battery 1a is manufactured by preliminarily charging while being sandwiched between the two plates 16 and applying a load. Subsequently, the plate 16 is removed, and only the internal battery 1a is taken out (FIG. 7(3)), and is arranged in a laminated film or a fiber-reinforced plastic and sealed, whereby the flexible all-solid-state battery 18 including the exterior body 17 can be manufactured. In addition, after the initial charging is completed, the internal battery may be discharged to an extent as not to be excessively discharged, and then the internal battery may be taken out, and the external body 17 may be formed.

In an embodiment, a load when forming a cross-link of a polymer is preferably in a range of 1 kPa to 500 kPa or in a range of 5 kPa to 300 kPa.

In an embodiment, a load at the time of an initial charge is preferably in a range of 1 kPa to 1 MPa or in a range of 5 kPa to 300 kPa.

### [Examples]

### [Example 1] Internal Battery 1a

Next, a preferred specific method of manufacturing the flexible all-solid-state battery described in the embodiment described above will be described with reference to FIG. 5 to FIG. 7. Hereinafter, steps of examples and comparative examples were performed in a dry booth or in a vacuum at a dew point temperature of -40°C or lower.

A portion where a positive electrode composite layer 8-1 was coated in a commercially available positive electrode sheet (HS-LIB-P-Co-003 or HS-LIB-P-NMC-001, Hohsen Corporation) was cut out as an electrode terminal with a size of 37 mm × 47 mm, a portion where the positive electrode composite was uncoated and the aluminum foil as the positive electrode current collector 2 was exposed was cut out as an electrode terminal having a width of 10 mm and in a length of 15 mm. Thereafter, the positive electrode composite layer 8-1 was impregnated with a polymer solution obtained by mixing a commercially available polymer electrolyte and an initiator (product of ionic conductivity and a transport number at 60°C in a crosslinked solid-state polymer electrolyte is about 1.0×10⁻⁴ S/cm) (FIG. 5(2)), a laminate film (DIAMIRON (registered trademark) M, thickness: 70 µm, Mitsubishi Chemical Corporation) 15 cut out with a size of 50 mm × 60 mm was laminated, sandwiched between two glass plates 16 having thickness of 5 mm, sandwiched between two alloy tool steels (vacuum-hardened SKD11, thickness of 3 mm), tightened with a torque of 3 cN·m through screws M3 to four screw holes (eight locations in two alloy tool steels) thereof, and a cross-link at the same temperature as in Patent Literature 3 (FIG. 5(3)) was formed. Subsequently, the laminate film 15 was peeled off (FIG. 5(4)), the polymer solution 14 was applied to the positive electrode composite layer 8-1 provided with the solid-state polymer electrolyte (FIG. 5(5)), and similarly, the laminate film 15 was laminated and sandwiched between the glass plates 16 and the alloy tool steels, and the screws M3 were tightened with a torque of 3 cN·m, and a cross-link was formed by heat (FIG. 5(6)) in the same manner, the laminate film 15 was peeled off, and the layer 11 of the solid-state polymer electrolyte was laminated on the positive electrode sheet 12 (FIG. 5(7)).

Next, a portion of a commercially available negative electrode sheet (HS-LIB-N-Gr-001, Hohsen Corporation) coated with the negative electrode composite layer 9-1 was cut out as an electrode terminal with a size of 40 mm × 50 mm, and a portion where the negative electrode composite layer 9-1 was uncoated and copper foil as the negative electrode current collector 7 was exposed was cut out as an electrode terminal with a width of 10 mm and a length of 15 mm at a position different from the positive electrode sheet 12. Thereafter, a negative electrode composite is impregnated with the polymer solution 14 (FIG. 6 (2)), the laminate film 15 cut out with a size of 50 mm × 60 mm was laminated, sandwiched by two glass plates 16 with a thickness of 5 mm, further sandwiched by two alloy tool steels, tightened with a torque of 3 cN·m through screws M3 to four screw holes (eight locations in two alloy tool steels) thereof, and similarly a cross-link was formed by heat (FIG. 6 (3)). Subsequently, the laminate film 15 was peeled off (FIG. 6(4)), the polymer solution 14 was applied to the negative electrode composite layer 9-1 including the solid-state polymer electrolyte (FIG. 6(5)), the laminate film 15 was similarly laminated, sandwiched between the glass plates 16 and the alloy tool steels, and tightened with a torque of 3 cN·m through screws M3 (FIG. 6(6)), the laminate film 15 was peeled off, and the layer 11 of the solid-state polymer electrolyte was laminated on the negative electrode sheet 13 (FIG. 6(7)).

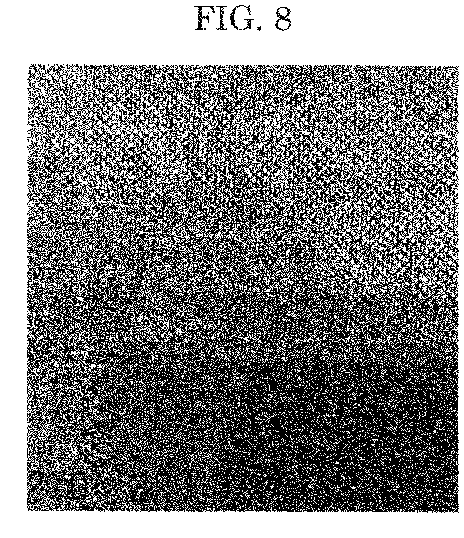

Next, the polymer solution 14 was applied on the layer 11 of the solid-state polymer electrolyte on the negative electrode sheet 13. Thereafter, as the separator 4a, a glass cloth (fiber thickness: 5 µm, 24 g/m², thickness: 20 µm, see FIG. 8) cut out with a size of 50 mm × 60 mm is impregnated by being placed on the coated polymer solution 14, and after bonding to the positive electrode sheet 12 laminated with the layer 11 of the solid-state polymer electrolyte (FIG. 7 (1)), so that the electrode terminal can be taken out, sandwiched between the two laminated films 15, sandwiched by the glass plates 16, further sandwiched by the alloy tool steels, tightened with a torque of 3 cN·m through screws M3, a cross-link was similarly formed by heat to obtain a structure including an internal battery (FIG. 7 (2)). Although twenty-two of these structures were manufactured, all of them were not short-circuited.

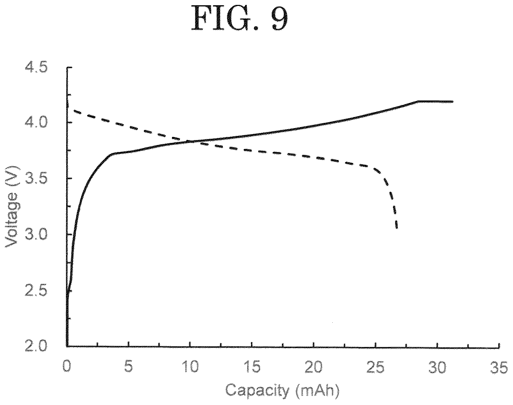

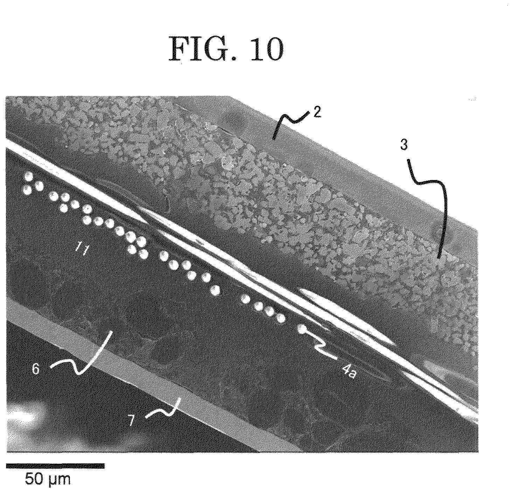

Next, an electrode terminal was connected to a battery charging/discharging device (manufactured by Hokuto Denko Corporation) without removing the screws M3, and under a 60°C environment, HS-LIB-P-Co-003 was charged with a constant current of 0.1 C until 4.2 V, HS-LIB-P-NMC-001 was charged until 4.3 V, and the current was controlled to be constant for 1 hour or more. Then, it was discharged at the constant current of 0.1 C until 3.0 V. A typical charge/discharge curve is shown in FIG. 9. After confirming that the typical charge/discharge curve of about 25 mAh to 27 mAh is obtained, the internal battery 1a was manufactured by removing the screws M3 to remove the glass plates, the alloy tool steels, and the laminated film 15. FIG. 10 is a cross-sectional SEM image of the manufactured internal battery 1a. It can be confirmed that the layer 11 of the solid-state polymer electrolyte is provided so that the glass cloth as the separator 4 and the negative electrode active material 6 and the positive electrode active material 3 do not come into contact with each other. Among twenty-two of internal batteries 1a, which were manufactured, nineteen were normally charged and discharged.

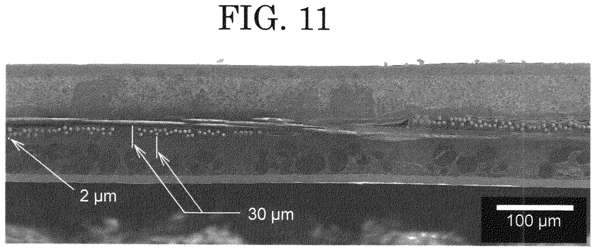

FIG. 11 is a cross-sectional SEM image of the internal battery 1a of the Example 1. In the internal battery 1a, it was found that the layer 11 of the solid-polymer electrolyte was formed with a film thickness of 2 µm to 30 µm.

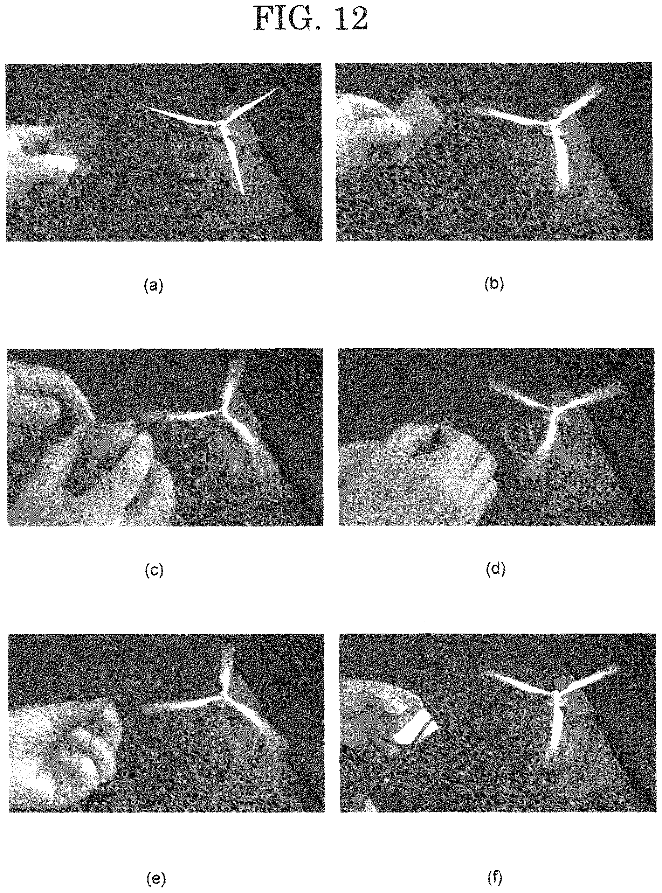

Next, the internal battery was wrapped with a glass cloth so that electrode terminals of the positive and negative electrodes could be taken out, and a flexible epoxy resin (Mitsubishi Chemical Corporation) was impregnated into the glass cloth by Vacuum Assisted Resin Transfer Molding (VaRTM) to form the exterior body 17, thereby producing the flexible all-solid-state battery 18. FIG. 12 is a photograph when a propeller was attached to a rotation shaft of a motor, and the flexible all-solid-state battery 18 was connected thereto. It was confirmed that the motor was highly safe because it was able to rotate even if it was bent (c) or folded (d) and (e), and cut off by scissors (f), or pushed by a finger or hit by the handle of the scissors.

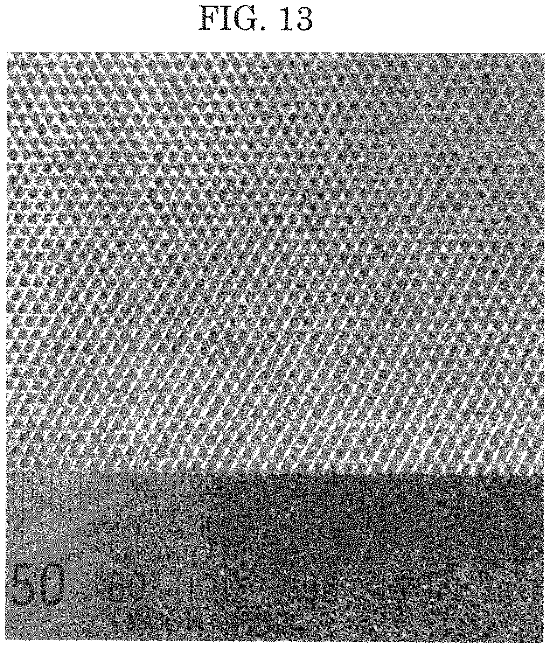

In the same process as described above, four small batteries were manufactured with a circle using a negative electrode sheet with a diameter of 13 mmϕ and a positive electrode sheet of 1 cm², and it was confirmed that the four batteries were normally charged and discharged. Separators used in this case are a glass cloth having a thickness of 20 µm, a glass fiber having a thickness of 65 µm and an aramid fiber (opening length: about 1 mm, see FIG. 13).

### [Example 2] Internal battery 1

A commercially available positive electrode sheet (HS-LIB-P-NMC-001, Hohsen Corporation) was cut out in a circle of 1 cm², and alumina particles having a particle diameter of 10 µm were applied as the separator 4 on the positive electrode composite layer 8-1. Thereafter, a polymer solution was impregnated, a laminate film was laminated so as to cover the polymer solution, sandwiched between the plates 16, a cross-link was formed by heat while applying a load of 250 MPa, and the laminate film was peeled off, whereby the layer 10 of the separators including the solid-state polymer electrolyte was laminated so as to be in contact with the positive electrode sheet 12.

Next, a commercially available negative electrode sheet (HS-LIB-N-Gr-001, Hohsen Corporation) was cut out in a diameter of 13 mmϕ. Thereafter, the negative electrode composite layer 9-1 was impregnated with a polymer solution, a laminate film was laminated so as to cover the polymer solution, sandwiched between the plates 16, and a cross-link was formed by heat while applying a load of 180 MPa, whereby the laminate film was peeled off, thereby manufacturing the negative electrode sheet 13.

Next, the polymer solution 14 was applied on the negative electrode sheet 13, and the positive electrode sheet 12 in which the layer 10 of a separator including a solid-state polymer electrolyte was laminated was bonded, sandwiched between the plates 16 having conductivity, and a cross-link was formed by heat in the same manner while applying a load of 250 MPa to obtain a structure including the internal battery 1. Although two of these structures were manufactured, all of them were not short-circuited.

Next, each of the plates 16 in contact with the positive electrode current collector 2 and the negative electrode current collector 2 was connected to a battery charging/discharging device (Hokuto Denko Corporation) while maintaining the structure with the internal battery subjected to a load of 250 MPa, charged with a constant current of 0.1 C until 4.3 V under a 60°C environment, and the current was controlled so as to be constant for 1 hour or more. Then, it was discharged with a constant current of 0.1 C until 3.0 V. Two of the manufactured internal batteries 1 were able to perform normal charging and discharging.

### [Comparative Example] Internal Battery according to Step of Not Providing Layer of Solid-state Polymer Electrolyte

A portion coated with a positive electrode composite of a commercially available positive electrode sheet (HS-LIB-P-Co-003 or HS-LIB-P-NMC-001, Hohsen Corporation) was cut out as an electrode terminal with a size of 37 mm × 47 mm, a portion where the positive electrode composite was uncoated and aluminum foil was exposed was cut out as an electrode terminal with a width of 10 mm and a length of 15 mm. Thereafter, the polymer solution was impregnated, a laminate film cut out with a size of 50 mm × 60 mm was laminated, sandwiched by two glass plates, further sandwiched by two alloy tool steels, tightened with a torque of 3 cN·m through screws M3 to four screw holes (eight locations in two alloy tool steels) thereof, similarly forming a cross-link by heat, and the laminate film was peeled to produce a positive electrode sheet 1A.

Next, a portion coated with a negative electrode composite of a commercially available negative electrode sheet (HS-LIB-N-Gr-001, Hohsen Corporation) was cut out as an electrode terminal with a size of 40 mm × 50 mm, and a portion where the negative electrode composite was uncoated and copper foil was exposed was cut out as an electrode terminal with a width of 10 mm and a length of 15 mm at a position different from the positive electrode sheet. Thereafter, the negative electrode composite was impregnated with a polymer solution, a laminate film cut out with a size of 50 mm × 60 mm was laminated, sandwiched by two glass plates of 5 mm thickness, further sandwiched by two alloy tool steels, tightened with a torque of 3 cN·m through screws M3 to four screw holes (eight locations in two alloy tool steels) thereof, similarly forming a cross-link by heat, and the laminate film was peeled to produce a negative electrode sheet 1A.

Next, in the same manner as in Prior Literature 3, a polymer solution was applied onto the negative electrode sheet 1A, and thereafter, a glass cloth (fiber thickness: 5 µm, 24 g/m², thickness: 20 µm) cut out with a size of 50 mm × 60 mm was placed on the coated polymer solution, impregnated, and bonded to the positive electrode sheet 1A. Then, so that the electrode terminal can be taken out, sandwiched by two laminated films, sandwiched by a glass plates, further sandwiched by the alloy tool steels, tightened with a torque of 3 cN·m through screws M3, similarly forming a cross-link by heat to obtain a structure including an internal battery. Hereinafter, this structure including the internal battery will be referred to as a comparative battery 1A-L. Eight of these batteries were manufactured.

In the same process as in the comparative battery 1A-L, a small-sized battery was manufactured with a circle using a negative electrode sheet with a diameter of 13 mmϕ and a positive electrode sheet of 1 cm². The structure including this internal battery is referred to as a comparative battery 1A-S.

A portion coated with a positive electrode composite of a commercially available positive electrode sheet (HS-LIB-P-NMC-001, Hohsen Corporation) was cut out as an electrode terminal with a size of 37 mm × 47 mm or 27 mm × 47 mm, a portion which is uncoated with a positive electrode composite and aluminum foil was peeled out was cut out as an electrode terminal with a width of 10 mm and a length of 15 mm, and alumina particles having a particle diameter of 2 µm were deposited on the positive electrode composite layer. Thereafter, a mixed solution of the polymer solution was impregnated and similarly a cross-link was formed by heat to produce a positive electrode sheet. This positive electrode sheet is referred to as a positive electrode sheet 1B.

A portion coated with a positive electrode composite of a commercially available positive electrode sheet (HS-LIB-P-NMC-001, Hohsen Corporation) was cut out as an electrode terminal with a size of 37 mm × 47 mm or a 27 mm × 47 mm, and a portion where the positive electrode composite was not coated and aluminum foil was exposed was cut out as an electrode terminal with a width of 10 mm and a length of 15 mm. Thereafter, a mixed solution of the polymer solution was impregnated, and similarly a cross-link was formed by heat to produce a positive electrode sheet. This positive electrode sheet is referred to as a positive electrode sheet 1C.

Next, a portion coated with a negative electrode composite of a commercially available negative electrode sheet (HS-LIB-N-Gr-001, Hohsen Corporation) was cut out as an electrode terminal with a size of 40 mm × 50 mm or 30 mm × 50 mm, and a portion where the negative electrode composite were uncoated and copper foil was exposed was cut out as an electrode terminal with a width of 10 mm and a length of 15 mm at a position different from the positive electrode sheet described above, and alumina particles having a particle size of 2 µm were deposited on the negative electrode composite layers. Thereafter, a mixed solution of the polymer solution was impregnated and similarly a cross-link was formed by heat to produce a positive electrode sheet. This negative electrode sheet is referred to as a negative electrode sheet 1B.

Next, a portion coated with a negative electrode composite of a commercially available negative electrode sheet (HS-LIB-N-Gr-001, Hohsen Corporation) was cut out as an electrode terminal with a size of 40 mm × 50 mm or 30 mm × 50 mm and a portion where the negative electrode composite was uncoated and copper foil was exposed was cut out as an electrode terminal with a width of 10 mm and a length of 15 mm at a position different from the positive electrode sheet described above. Thereafter, a mixed solution of the polymer solution was impregnated and similarly a cross-link was formed by heat to produce a positive electrode sheet. This negative electrode sheet is referred to as a negative electrode sheet 1C.

The polymer solution was applied onto the negative electrode sheet 1B or the negative electrode sheet 1C, and then a glass cloth (fiber thickness: 5 µm, 24 g/m², thickness: 20 µm) cut out with a size of 50 mm × 60 mm was placed on the coated polymer solution and the coated polymer solution, impregnated, and then bonded to the positive electrode sheet 1B or the positive electrode sheet 1C. Then, so that the electrode terminal can be taken out, sandwiched by two laminated films, sandwiched by glass plates, further sandwiched by alloy tool steels, tightened with a torque of 3 cN·m through screws M3, similarly a cross-link was formed by heat to obtain a structure including an internal battery. Hereinafter, this structure including the internal battery will be referred to as a comparative battery 1B-L.

A polymer solution was applied to the negative electrode sheet 1B and then bonded to the positive electrode sheet 1B. Then, so that the electrode terminal can be taken out, sandwiched by two laminated films, sandwiched by glass plates, further sandwiched by alloy tool steels, tightened with a torque of 3 cN·m through screws M3, similarly a cross-link was formed by heat to obtain a structure including an internal battery. Hereinafter, this structure including the internal battery will be referred to as a comparative battery 1C-L.

In the same process as in the comparative battery 1B-L, a small-sized battery was manufactured with a circle using a negative electrode sheet with a diameter of 13 mmϕ and a positive electrode sheet of 1 cm². The structure including this internal battery is referred to as a comparative battery 1B-S.

In the same process as in the comparative battery 1C-L, a small-sized battery was manufactured with a circle using a negative electrode sheet with a diameter of 13 mmϕ and a positive electrode sheet of 1cm². The structure including this internal battery is referred to as a comparative battery 1C-S.

A polymer solution was applied onto the negative electrode sheet 1C, and thereafter, a non-woven cloth (obtained by dissolving paraffin in hot acetone in a chemical wrapper) cut out with a size of 50 mm × 60 mm was placed on the coated polymer solution, impregnated, and bonded to the positive electrode sheet 1C. Then, so that the electrode terminal can be taken out, sandwiched by two laminated films, sandwiched by glass plates, further sandwiched by alloy tool steels, tightened with a torque of 3 cN·m through screws M3, similarly a cross-link was formed by heat to obtain a structure including an internal battery. Hereinafter, this structure including the internal battery will be referred to as a comparative battery 1D-L.

Regarding the manufactured comparative battery 1A-L, comparative battery 1A-S, comparative battery 1B-L, comparative battery 1B-S, comparative battery 1C-L, comparative battery 1C-S, and comparative battery 1D-L, electrode terminals were connected to a battery charging/discharging device (manufactured by Hokuto Denko Corporation) while maintaining the structure with the internal battery without removing the screws, charged with a constant current of 0.1 C until 4.2 V for HS-LIB-P-Co-003 and 4.3 V for HS-LIB-P-NMC-001 under a 60°C environment, and the current was controlled so as to be constant for 1 hour or more. Then, it was discharged with a constant current of 0.1 C until 3.0 V.

Only one of the comparative batteries 1A-L was able to be charged and discharged among a total of 17 pieces of the comparative battery 1A-L, the comparative battery 1B-L, the comparative battery 1C-L, and the comparative battery 1D-L, and only two were able to be charged and discharged among a total of 9 pieces of the comparative battery 1A-S, the comparative battery 1B-S, and the comparative battery 1C-S. Regarding the comparative battery 1D-L, since 4.3 V was reached immediately after the charge started, no lithium ions were conducted.

Although when a polymer solution was applied to the non-woven fabric, the polymer solution was impregnated, when similarly forming a cross-link by heat, the solid-state polymer electrolyte escaped out of the non-woven fabric. From this, it is considered that in the comparative battery 1D-L, the solid-polymer electrolyte was not included in a layer of a separator, and therefore, the battery could not be charged. In addition, the solid-state polymer electrolyte, which is an organic polymer, has a very large molecular weight, and therefore, when forming and solidifying a cross-link, it tends to escape from small pores. That is, if a layer of a solid-state polymer electrolyte is not intentionally laminated on a positive electrode composite layer or a negative electrode composite layer, a solid-state polymer electrolyte between a separator and an active material may come out due to formation of a cross-link of the polymer electrolyte, and as a result, the separator and the active material may come into close contact with each other, movement of lithium ions may be suppressed, and charging and discharging may not be performed.

In particular, in the case where graphite is used as the negative electrode active material, since a reduction potential is very low at about 0.5 V (vs. Li/Li⁺), it is sufficiently considered that metallic lithium is easily generated when a separator that inhibits the movement of lithium ions is attached to a surface of the graphite, and consequently, a short-circuit easily occurs during charging. It is considered that defects caused by such adhesion between the separator and the active material are more likely to occur as an electrode area becomes larger.

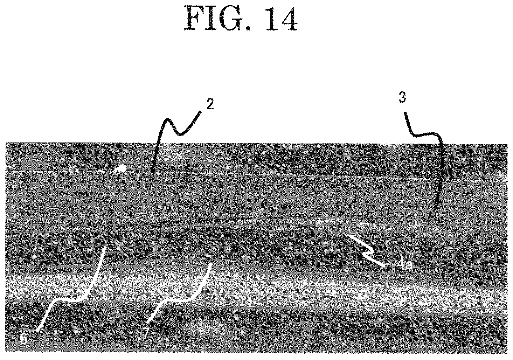

In fact, it can be seen from the cross-sectional SEM image (FIG. 14) of the comparative battery 1A-L that could not be charged that the positive electrode active material 3 and the negative electrode active material 6 are in close contact with the glass cloth which is the separator 4a.

Further, after bonding the circle of 1 cm² produced in the same process as the positive electrode sheet 1C and 13 mmϕ produced in the same process as the negative electrode sheet 1A with a polymeric solution, both of the two internal batteries bonded by formation of a cross-link by heat showed normal charge/discharge properties.

### [Comparative Example 2] Internal Battery not Pressurized during Initial Charging

A portion coated with a positive electrode composite of a commercially available positive electrode sheet (HS-LIB-P-NMC-001, Hohsen Corporation) was cut out in a 1 cm² circle, impregnated with a polymer solution, and similarly a cross-link was formed by heat to produce a positive electrode sheet 2A.

A portion coated with a negative electrode composite of a commercially available negative electrode sheet (HS-LIB-N-Gr-001, Hohsen Corporation) was cut out in a 1 cm² circle, impregnated with a polymer solution, and similarly a cross-link was formed by heat to produce a negative electrode sheet 2A.

A portion coated with a positive electrode composite of a commercially available positive electrode sheet (HS-LIB-P-NMC-001, Hohsen Corporation) was cut out in a 1 cm² circle to produce a positive electrode sheet 2B impregnated with a polymer electrolyte containing no initiator.

A portion coated with a negative electrode composite of a commercially available negative electrode sheet (HS-LIB-N-Gr-001, Hohsen Corporation) was cut out in a 1 cm² circle to produce a negative electrode sheet 2B impregnated with a polymer electrolyte containing no initiator.

A polymer solution was applied onto the negative electrode sheet 2A, and a glass cloth (fiber thickness: 5 µm, 24 g/m², thickness: 20 µm) cut out with a size of 20 mm × 20 mm level or alumina particles having a particle diameter of 2 µm was placed on to the coated polymer solution, impregnated and then bonded to the positive electrode sheet 2A. Thereafter, the positive electrode and negative electrode were subjected to vacuum packing while taking out the electrodes of the positive and negative electrodes and similarly a cross-link was formed by heat to obtain a structure including an internal battery. Hereinafter, this structure including the internal battery will be referred to as a comparative battery 2A.

The positive electrode sheet 2B and the negative electrode sheet 2B were bonded to each other via a sheet of a solid-polymer electrolyte with a size of about 20 mm × 20 mm (thickness of about 50 µm), and then the positive electrode and the negative electrode were vacuum-packed while taking out the electrodes of the positive and negative electrodes to obtain a structure including an internal battery. Hereinafter, this structure including the internal battery will be referred to as a comparative battery 2B.

With respect to the manufactured comparative battery 2A and comparative battery 2B, the electrode terminals were connected to a battery charging/discharging device (manufactured by Hokuto Denko Corporation), charged with a constant current of 4.3 V at 60°C until 0.1 C, and the current was controlled so that the voltage became constant for 1 hour or more as it is, but none of the comparative batteries 2A and the comparative batteries 2B, total of 14 sheets, were able to be charged/discharged. The vacuum pack was expanded by charging.

It is known that in the case where graphite is used as the negative electrode, a graphite surface and the electrolyte react to form Solid Electrolyte Interphase (SEI). When SEI is formed, gases may be generated, and it is considered that the active material and the solid-polymer electrolyte need to be pressurized in order to maintain adhesion between the active material and the solid-polymer electrolyte.

### [Comparative Example 3] Internal Battery not including Separator

After bonding the positive electrode sheet 2B and the negative electrode sheet 2B via a sheet of a solid-state polymer electrolyte of about 20 mm × 20 mm thickness (about 50 µm), it was sandwiched between two alloy tool steels, and the alloy tool steels were tightened with a torque of 3 cN·m through screws M6 so that the battery does not short-circuit. Hereinafter, this structure including the internal battery is referred to as a comparative battery 3. Two comparative batteries 3 were manufactured.

Next, connecting this comparative battery 3 to a battery charging/discharging device (manufactured by Hokuto Denko Corporation) with the structure including the internal battery without removing the screws M6 of this comparative battery 3 as it is, and charging with a constant current of 0.1 C until it became 4.3 V under a 60°C environment, the current was controlled so as to be constant for 1 hour or more. After that, the current was discharged until it became 3.0 V at the constant current of 0.1 C. Both of the two manufactured batteries showed normal charging and discharging. Subsequently, the screws M6 were removed, the internal batteries were taken out, and the two batteries were short-circuited when they were folded. Since the separator was not included, it was confirmed that a short-circuit was caused by excessive bending.

### [Comparative Example 4] Adhesion of Polymer Solution impregnated in Composite Layer before Forming Cross-link

A portion coated with a positive electrode composite of a commercially available positive electrode sheet (HS-LIB-P-NMC-001, Hohsen Corporation) was cut out as an electrode terminal with a size of 37 mm × 47 mm, a portion uncoated with a positive electrode composite and aluminum foil is exposed was cut out as an electrode terminal with a width of 10 mm and a length of 15 mm, and then a positive electrode sheet 4A impregnated with a polymer solution was manufactured.

Next, a portion coated with a negative electrode composite of a commercially available negative electrode sheet (HS-LIB-N-Gr-001, Hohsen Corporation) was cut out as an electrode terminal with a size of 40 mm × 50 mm, a position where the negative electrode composite was uncoated and copper foil was exposed was cut out as an electrode terminal with a width of 10 mm and a length of 15 mm at a position different from the positive electrode sheet described above, and then a negative electrode sheet 4A impregnated with a polymer solution was manufactured.

A polymer solution was applied onto the negative electrode sheet 4A, and then a glass cloth (fiber thickness: 5 µm, 24 g/m², thickness: 20 µm) cut out with a size of 50 mm × 60 mm is placed onto the applied polymer solution and impregnated, and then bonded to the positive electrode sheet 4A, and all six manufactured batteries were short-circuited.

### [Comparative Example 5] Solid-state Polymer Electrolyte with Low Ionic Conductivity

In the same process as in the comparative example 1 to the comparative example 4, 32 internal batteries were manufactured using a solid-state polymer electrolyte having ionic conductivity of 5.0 × 10⁻⁵ S/cm and a lithium ion transport rate of 0.1 at room temperature (25°C), but even under 60°C and 0.01 C conditions, an initial charge was immediately increased to 4.2 V or higher, and none of the batteries could be charged and discharged. With regards to the performance of the solid-state electrolyte, it is considered that the ionic conductivity required for charging and discharging 1.5 mAh/cm² is insufficient.

**[Table 1]**

| | Size of internal battery | |
|---|---|---|
| | 13 mmϕ | 40 mm × 50 mm or 30 mm × 50 mm |
| Example 1 | 4/4 | 19/22 |
| Example 2 | 2/2 | ------ |
| Comparative example 1 | 2/9 | 1/17 |
| Comparative example 2 | 0/14 | ------ |
| Comparative example 3 | 2/2 | ------ |
| Comparative example 4 | ------ | 0/6 |
| Comparative example 5 | 0/32 | ------ |

| | | |
|---|---|---|
| · A numerator is a number showing normal charging/discharging · A denominator is the number of the produced batteries | | |

The results of the examples 1 and 2 and the comparative examples 1 to 5 are shown in the table 1 above. By providing a layer of the solid-state polymer electrolyte between the active material and the separator, it not only provides a high level of safety without short-circuiting even if bent, but also has the excellent effect of making it dramatically easier to manufacture even on large areas.

### [Example 3] Electric Unit in which Internal Battery is Laminated

After 18 internal batteries manufactured in the example 1 were laminated as shown in FIG. 4, 18 internal batteries manufactured in the example 1 were wrapped with aramid fibers so as to be able to take out the electrode terminals, to form an exterior body by impregnating a flexible epoxy resin with a VaRTM, and to manufacture a high-capacity all-solid-state battery.

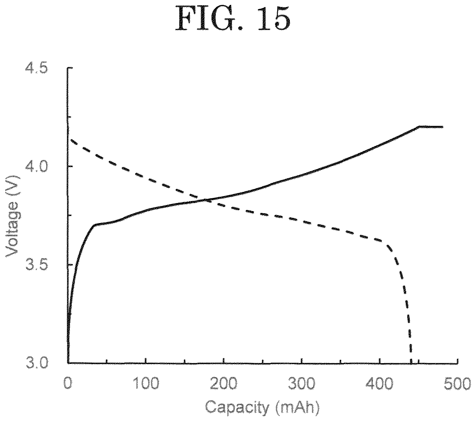

FIG. 15 shows the charging/discharging properties of high-capacity all-solid-state batteries manufactured in 60°C and 0.05 C. The discharging capacitance includes 440 mAh and has 100 Wh/kg of weight energy density, including an exterior body, which is sufficient to be implemented in a wearable device.

### INDUSTRIAL APPLICABILITY

A flexible all-solid-state battery according to the present invention has sufficient performance to move various sensor devices. Among them, it is suitable for use as a lithium ion secondary battery worn by a person from a battery carried by a person because it has not only flexibility but also an extremely high level of safety that does not short-circuit even if it is bent, cut, or hit.

### REFERENCES SIGNS LIST

1: internal battery of flexible all-solid-state battery, 1a: internal battery of flexible all-solid-state battery, 2: positive electrode current collector, 3: positive electrode active material, 4: separator, 4-1: hole, 4-2: opening, 4a: separator, 4a-1: hole, 4a-2: opening, 5: solid-state polymer electrolyte, 6: negative electrode active material, 7: negative electrode current collector, 8: layer including positive electrode active material, 8-1: positive electrode composite layer, 9: layer including negative electrode active material, 9-1: negative electrode composite layer, 10: layer of separator including solid-state polymer electrolyte, 11: layer of solid-state polymer electrolyte, 12: positive electrode sheet, 13: negative electrode sheet, 14: polymer solution, 15: polymer film, 16: plate, 17: exterior body, 18: flexible all-solid battery containing high capacity internal battery, 19: internal battery laminate, 20: high capacity internal battery in which the electrode terminal positions are inverted at positive and negative electrodes, 21: electric unit in which high capacity internal battery are laminated

## Claims

1. A flexible all-solid-state battery comprising: a layer of a solid-state polymer electrolyte arranged between a layer of a separator supporting the solid-state polymer electrolyte and a layer including a negative electrode active material.

2. The flexible all-solid-state battery according to claim 1, wherein the separator includes a woven fabric, a knit or a non-woven cloth of an inorganic fiber or a polymeric fiber of 1 g/m² to 70 g/m² with a thickness in a range from 1 µm to 100 µm,
an oxide ceramic particle layer including oxide ceramic particles with a particle size from 1 µm to 20 µm at a filling rate in a range from 5% to 60%, or
a complex of the woven fabric, the knit, or the non-woven cloth and the oxide ceramic particles.

3. The flexible all-solid-state battery according to claim 1, wherein a thickness of the layer of the solid-state polymer electrolyte is in a range from 500 nm to 60 µm.

4. The flexible all-solid-state battery according to claim 1, wherein the flexible all-solid-state battery includes a negative electrode sheet composed of a layer including the negative electrode active material and a negative electrode current collector contacting the negative electrode active material, and
the negative electrode sheet has a capacitance from 0.1 mAh/cm² to 7 mAh/cm².

5. The flexible all-solid-state battery according to claim 1, wherein the flexible all-solid-state battery further includes a positive electrode sheet having a capacitance from 0.1 mAh/cm² to 7 mAh/cm².

6. The flexible all-solid-state battery according to claim 1, wherein a thickness of a layer of a solid-state polymer electrolyte arranged between the layer of the separator supporting the solid-state polymer electrolyte and a layer including a positive electrode active material is in a range from 500 nm to 60 µm.

7. The flexible all-solid-state battery according to claim 1, wherein the flexible all-solid-state battery has an electrode area larger than 1.77 cm².

8. The flexible all-solid-state battery according to any one of claims 1 to 7, wherein the flexible all-solid-state battery has a bent shape.

9. A method for manufacturing a flexible all-solid-state battery comprising:
applying a polymer solution mixed with a polymer electrolyte and an initiator on a composite material layer including an active material supporting a solid-state polymer electrolyte, laminating a flat board or a film, and forming a cross-link while applying a load in a range of 1 kPa to 500 kPa;
applying the polymer solution on a positive electrode sheet or a negative electrode sheet, placing a separator on the applied polymer solution to impregnate with the polymer solution, sandwiching between flat plates or films after pasting with the negative electrode sheet or the positive electrode sheet, and forming a cross-link while applying a load in a range of 1 kPa to 500 kPa; and
manufacturing an all-solid-state battery including a layer of the solid-state polymer electrolyte on both surfaces of the separator supporting the solid-state polymer electrolyte.

10. The method for manufacturing the flexible all-solid-state battery according to claim 9, wherein the all-solid-state battery including the layer of the solid-state polymer electrolyte is sandwiched between flat plates or films, and an initial charging is performed while applying a load of 1 kPa to 1 MPa.
